# EUROPEAN PATENT APPLICATION

(11) **EP 2 476 632 A1**
(43) Date of publication of application: **18.07.2012**
(21) Application number: 10813623.5
(22) Date of filing: 20.08.2010
(51) Int. Cl.: B65D 81/32

(54) **LIQUID MIXING CONTAINER**

(30) Priority: 07.09.2009 JP 2009206226
(71) Applicant: Tokuyama Dental Corporation, Tokyo 110-0016 (JP)
(72) Inventor: YAMAGUCHI, Nobutoshi, Tokyo 110-0016 (JP); GYAKUSHI, Hidetoshi, Tokyo 110-0016 (JP)
(74) Representative: Jackson, Martin Peter
(86) International application number: PCT/JP2010/064091
(87) International publication number: WO 2011/027674

(57) **Abstract**

[Problems] To provide a two-liquid mixing container which prevents two liquids from being mixed together by erroneous operation and does not permit sheet-like contaminants from mixing into the mixed liquid.

[Means for Solution] A container body 2 of the two-liquid mixing container 1 is provided with liquid injection openings 7a, 8a for feeding different treating solutions into a plurality of liquid chambers 7, 8. A liquid chamber opening/closing member 4 is provided with sealing members which are fitted into one end side of the container body 2 and, at an advanced position of having entered into the liquid injection openings, work to close the liquid injection openings 7a, 8a to separately close the liquid chambers 7, 8 and, at a reversed position, work to open the liquid injection openings 7a, 8a permitting the liquid chambers 7, 8 to be communicated with each other.

## Description

### Technical Field:

This invention relates to a liquid mixing container capable of mixing two or more kinds of liquids together when in use.

### Background Art

Some dental adhesives are contained in a container for use repetitively a plurality of times while other dental adhesives are contained in a container for use for only one time of treatment. The former container for use repetitively a plurality of times contains the adhesive in an amount enough for the treatment of a number of times; i.e., at the time of use, a lid member is opened, and the adhesive is taken out by only a required amount for the treatment. The latter container contains the adhesive in an amount for only one time of treatment; i . e. , the container in a closed state is opened, and is discarded after the use irrespective of the amount of the adhesive that is remaining.
Dental materials of the type of mixing two liquids have often been used; i.e., two liquid that are separately contained are mixed together just before the use, and are used. The two-liquid mixing container has been frequently used since it obviates the need of injecting the two liquids while measuring them or the need of separately providing the mixing container.

For example, a patent document 1 discloses a two-liquid mixing container wherein a sheet-like separating member is provided for separating a liquid chamber on the front end side of an injector-shaped cylinder from a liquid chamber of the rear end side, different liquids are contained in the liquid chambers, and a piston is pushed into the cylinder to mix the two liquids together breaking the separating member.
Further, a patent document 2 discloses a two-liquid mixing container wherein a slide member is provided to slide in the container, two liquid chambers are arranged on the slide member in the direction of diameter of the container, and upper ports of the liquid chambers are sealed with sheet-like separating members. The container is provided with unsealing members facing the two upper openings to pierce the separating members simultaneously, and the slide member is moved toward the unsealing members to unseal the liquid chambers by the unsealing members thereby to mix the treating solutions in the two liquid chambers together.

### Prior Art Documents:

### Patent Documents:

Patent document 1: JP-2005-104534A
Patent document 2: JP-2004-510540T

### Outline of the Invention:

### Problems that the Invention is to Solve:

So far, as disclosed in the patent documents 1 and 2, any portion of the two-liquid mixing container is pushed so that the liquids are mixed together. According to the patent document 1, in particular, in case the container is fallen by mistake, the piston is pushed due to a shock and the liquids may be mixed together. It may, further, happen that the piston is accidentally pushed in against the will. According to the two-liquid mixing container of the patent document 2 in which the slide member is contained in the container body, the slide member can be prevented from being pushed in by erroneous operation, but a jig is necessary for pushing in the slide member at the time of mixing the two liquids together.
According to the two-liquid mixing containers of the patent documents 1 and 2, further, the liquids are separately packed by using a thin sheet, and at the time of use, the sheets are pierced through to mix the liquids together. If the sheets are pierced through, however, the fragments of sheets may be mixed into the mixed liquid becoming a cause of contaminants.
The present invention was accomplished under the above circumstances, and provides a liquid mixing container which prevents two liquids (or three or more liquids) from being mixed together by erroneous operation and does not permit sheet-like contaminants from mixing into the mixed liquid.

### Means for Solving the Problems:

To achieve the above object, the present invention provides a liquid mixing container comprising:
a container body having a plurality of liquid chambers provided with liquid injection openings, and a mixing chamber for communicating with each of the liquid chambers through the liquid injection openings; and
a liquid chamber opening/closing member fitted in the mixing chamber of the container body is capable of switching the liquid chambers and the mixing chamber into a communicated state or a closed state;
wherein the liquid chamber opening/closing member is provided with sealing members which, at an advanced position of having entered into the liquid injection openings, work to close the injection openings to separately close the liquid chambers and, at a backward position, work to open the injection openings permitting the liquid chambers to be communicated with the mixing chamber.
The sealing members of the liquid chamber opening/closing member of the liquid mixing container are desirably convex portions capable of being inserted in the liquid injection openings.
The liquid chamber opening/closing member of the liquid mixing container at the backward position can be turned in the circumferential direction with respect to the container body.
The container body of the liquid mixing container may have a liquid take-out opening formed With the liquid chamber on the side opposite to the position where the liquid injection opening is provided, and may be provided with a lid member for closing the liquid take-out opening.
The liquid mixing container may be such that the liquid chamber opening/closing member is provided with shaft-like first support portions for supporting the container body, the lid member is provided with shaft-like second support portions for supporting the container body and, after the lid member is detached from the container body, the first support portions and the second support portions are assembled together in a cross shape to support the container body in an erected attitude with the liquid take-out opening of the container body facing upward.

### Effects of the Invention:

The mixing container of the present invention is capable of storing liquids having different components by separately packing them in the each liquid chambers. Upon pulling the liquid chamber opening/closing member, the liquids that had been separately packed are mixed together in the mixing chamber in the container exhibiting the following effects in addition to the basic effects of the two-liquid mixing container.
The container body is provided with liquid injection openings for feeding the to-be-mixed liquids to the liquid chambers, and the liquid opening/closing member is provided with the sealing members which are fitted in the mixing chamber on the other end side of the container body. The sealing members, at the advanced position of having entered in the liquid injection openings, work to close the injection openings to separately close the liquid chambers and, at a backward position, work to open the injection openings permitting the liquid chambers to be communicated with each other. Upon pulling the liquid chamber opening/closing member instead of pushing it in, the liquid chambers are permitted to be communicated with the mixing chamber. Therefore, the liquids are prevented from being erroneously mixed together that could result from receiving shocks or strong gripping.
The sealing members of the liquid chamber opening/closing member are convex portions that can be inserted in the liquid injection openings and, at the reversed position, can be turned in the circumferential direction with respect to the container body. Therefore, upon turning the liquid chamber opening/closing member after having been pulled, valve bodies (closing portions) of the liquid chamber opening/closing member play the role of a stirrer enabling the mixed liquid to be stirred and mixed together.
Because of its structure, the liquids have not been separately packed by using a thin sheet. At the time of use, therefore, the liquids are mixed together without piercing through the sheet, and it does not happen that the fragments of sheet are mixed into the container.

### Brief Description of the Drawings:

[Fig. 1] is a disassembled perspective view of a two-liquid mixing container according to an embodiment of the invention.
[Fig. 2] is a sectional view of the two-liquid mixing container when the liquid chambers are closed in a state where the two-liquid mixing container of Fig. 1 is assembled.
[Fig. 3] is a sectional view of the two-liquid mixing container when the two liquid chambers are communicated with each other in the state where the two-liquid mixing container of Fig. 1 is assembled.
[Fig. 4] is a sectional view of the two-liquid mixing container when adhesives are injected into the liquid chambers in a state where the two-liquid mixing container of Fig. 1 is disassembled (in a state of upside down).
[Fig. 5] is a sectional view of the two-liquid mixing container when a lid member is separated away from the two-liquid mixing container of Fig. 1, and the thus removed lid member is fitted to the main body.
[Fig. 6] is a sectional view of the two-liquid mixing container when a mixed liquid of adhesives is being taken out from the liquid chambers of the two-liquid mixing container of Fig. 1.
[Fig. 7] is a perspective view of the two-liquid mixing container when the mixed liquid of adhesives is being taken out from the liquid chambers of the two-liquid mixing container of Fig. 1.

### Mode for Carrying Out the Invention:

The container according to an embodiment of the invention will now be described with reference to the drawings.

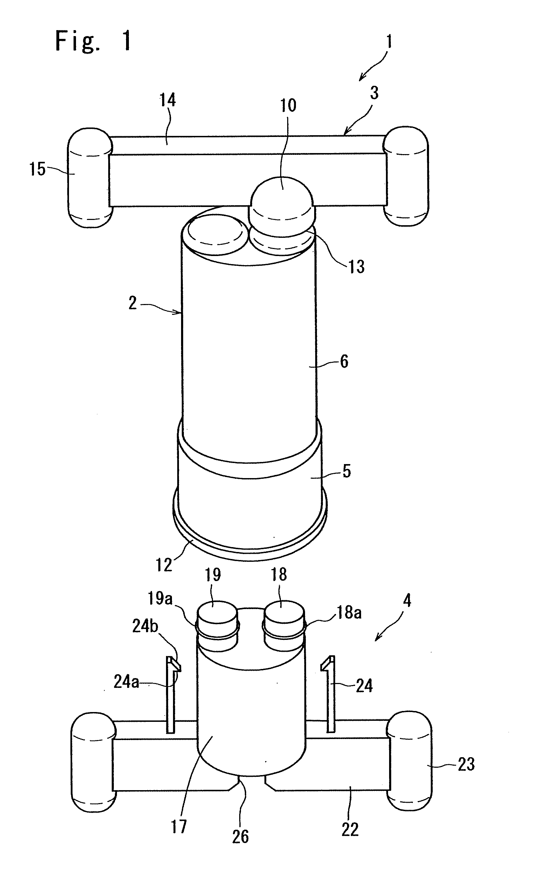

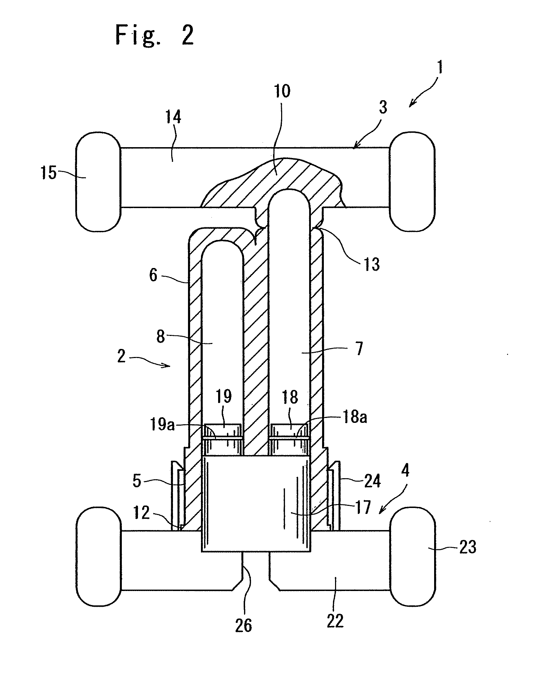

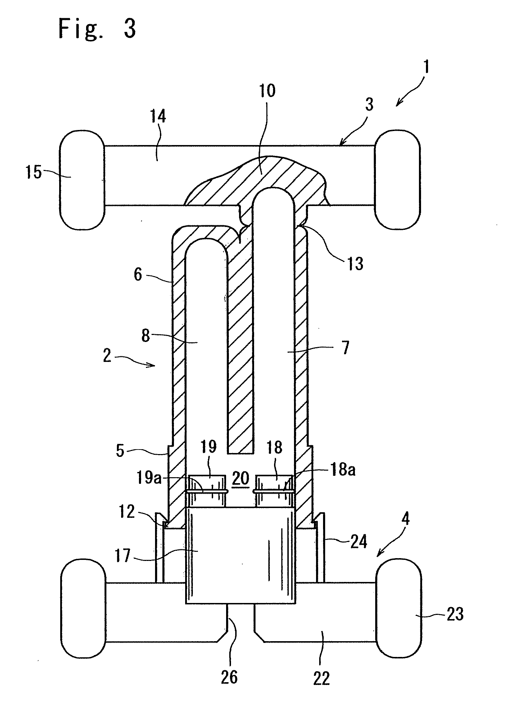

Fig. 1 is a disassembled view of a two-liquid mixing container that contains adhesives for dental treatment, Fig. 2 is a sectional view of when the liquid chambers of the two-liquid mixing container are closed, and Fig. 3 is a sectional view of when the liquid chambers are communicated with the mixing chamber.
The two-liquid mixing container 1 is a container of the so-called type that is discarded after the use of one time, and comprises a plastic container body 2, a lid member 3 provided at an upper portion of the container body 2, and a liquid chamber opening/closing member 4 disposed at a lower portion of the container body 2.

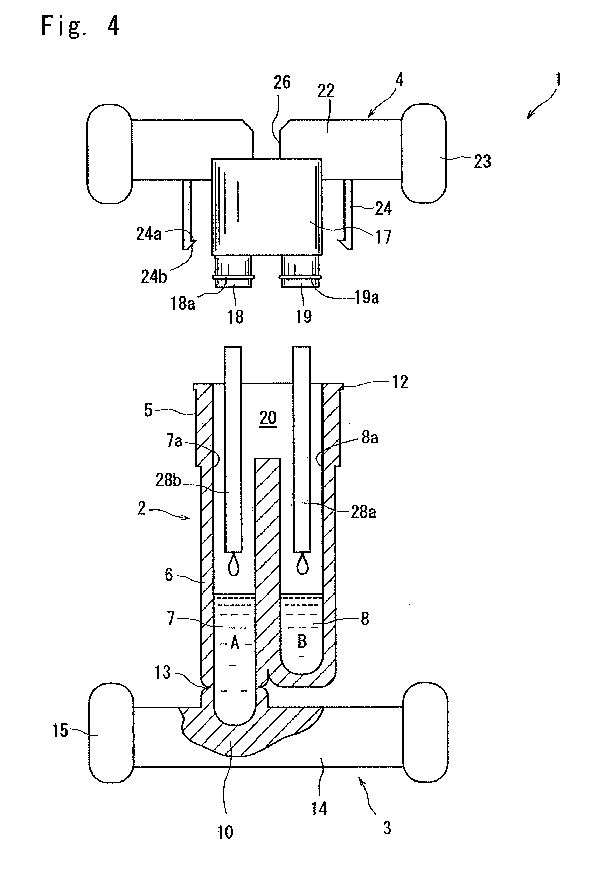

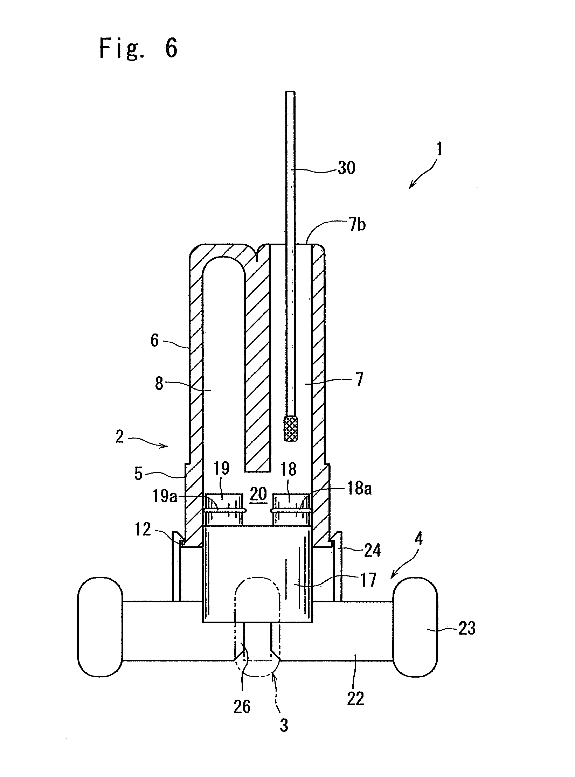

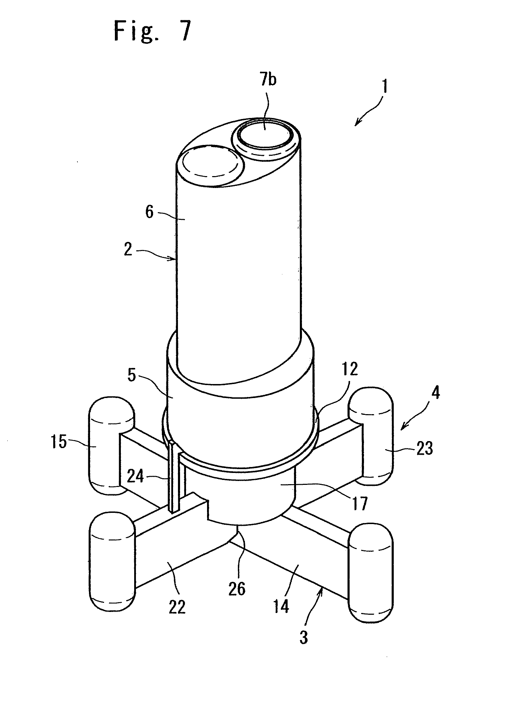

A circular cylindrical portion 5 is provided at the lower portion of the container body 2. The cylindrical portion 5 includes a mixing chamber 20 therein, has its lower end opened, and has a liquid chamber-forming portion 6 at an upper portion thereof. The interior of the liquid chamber-forming portion 6, in this embodiment, includes two liquid chambers, i.e., a first liquid chamber 7 and a second liquid chamber 8. The liquid chambers 7 and 8 have a circular shape in transverse cross section, and extend in the up-and-down direction of the container body 2. The liquid chambers 7 and 8 are forming liquid injection openings 7a and 8a (see Fig. 4) on the lower end side facing the mixing chamber 20 (upper end side of the liquid chambers in Fig. 4). The one or first liquid chamber 7 is longer than the other or second liquid chamber in the up-and-down direction of the container body 2, reaching the upper lid member 3, and its liquid take-out opening 7b is closed by the lid member 3 (see Figs. 6 and 7). The upper portion of the second liquid chamber 8 is separated by the ceiling wall of the liquid chamber-forming portion 6.
An annular protuberance 12 is formed on the outer circumference at the lower portion of the container body 2 so as to protrude toward the outer circumferential side of the container body 2.

The lid member 3 is formed integrally with the container body 2, and includes a lid body 10 and a wing portion 14. The lid body 10, as described above, closes the interior of the first liquid chamber 7. The wing portion 14 is so formed as to protrude toward the right and left outer sides of the lid body 10. The wing portion 14 is coupled to the lid body 10 (at one end), and is provided with support legs 15 coupled to the other end (outer most end) of the wing portion 14. The wing portion 14 is a plate member of a square shape, and the upper and lower ends of the support legs 15 are protruding toward both the upper and lower sides beyond the upper portion and the lower portion of the wing portion 14. The portion coupling the container body 2 to the lid member 3 is forming a brittle portion 13 by, for example, decreasing the thickness to be smaller than other portions or forming a notch. Upon turning the lid member 3, the brittle portion 13 permits the lid member 3 to be easily separated away from the container body 2.

The liquid chamber opening/closing member 4 can be fitted to the container body 2 from the openings at the lower end of the mixing chamber 20, and is provided with a base portion 17 of a cylindrical shape. The base portion 17 is provided with sealing members 18 and 19 that protrude upward from the upper surface thereof. The sealing members 18 and 19 are forming sealing members 18a and 19a at their intermediate portions in the up-and-down direction. The sealing members 18a and 19a may be formed in a manner that the circumferential surfaces of the sealing members 18 and 19 are annularly protruded outwards integrally therewith, or may be formed by fitting separate members such as O-rings to the circumferential surfaces thereof, or may not be formed if the liquids have large viscosities.
The base portion 17 has an outer diameter nearly equal to the caliber of the mixing chamber 20 of the container body 2 so as to maintain such a relationship that the outer circumferential surface of the base portion 17 is in close contact with the inner circumferential surface of the mixing chamber 20. When the adhesives having small viscosities are to be contained, the base portion may provide sealing relying on such means as annular sealing members 18a, 19a or the O-rings in the same manner as the sealing members 18 and 19.
The liquid chamber opening/closing member 4 is so formed and fitted as can be slid on the circumferential wall surface of the mixing chamber 20 in both the up-and-down direction and the circumferential direction. The sealing members 18 and 19, too, are formed in a size that fits to the liquid injection openings 7a and 8a of the liquid chambers 7 and 8 in close contact thereto so as to maintain air-tightness of the liquid chambers 7 and 8.
The liquid opening/closing member 4 can slide between an advanced position where it is positioned deeply inside the mixing chamber 20 relative to the container body 2 (see Fig. 2) and a reversed position where it is shallowly fitted in the mixing chamber 20 (see Fig. 3). When the liquid chamber opening/closing member 4 is at the advanced position as shown in Fig. 2, the sealing members 18 and 19 are fitted into the liquid injection openings 7a and 8a to close the liquid chambers 7 and 8 and to air-tightly separate the liquid chambers 7 and 8. At its reversed position as shown in Fig. 3, the liquid chamber opening/closing member 4 opens the liquid chambers 7 and 8. At the reversed position, an open space is formed in the upper part of the mixing chamber 20 that had been closed by the base portion 17, and the liquid chambers 7 and 8 are allowed to communicate with each other through the open space in the mixing chamber 20.

Wing portions 22 are formed at the lower portion of the base portion 17 of the liquid chamber opening/closing member 4 facing each other in the direction of diameter of the base portion 17 and protruding outward. The wing portions 22 are coupled at the ends on one side to the base portion 17, and have support legs 23 coupled to the other ends (distal ends) of the wing portions 22. The wing portions 22 are plate-like members of a square shape, and the upper and lower ends of the support legs 23 protrude upward and downward beyond the upper portion and the lower portion of the wing portions 22.
A pair of rod-shaped engaging portions (hook members) 24 are formed extending upward on the upper surfaces of the wing portions 22 at the intermediate portions thereof in the direction in which they extend. Pawls 24a (see Figs. 1 and 4) are formed at the distal ends of the engaging portions 24 protruding inward in the direction of diameter. Inclined surfaces 24b facing inward and downward (see Fig. 4) are formed at the ends of the pawls 24a. When the liquid chamber opening/closing member 4 is at its reversed position, the pawls 24 hook to the annular protuberance 12 of the container body 2 to restrict the reversed position of the liquid chamber opening/closing member 4. The advanced position of the liquid chamber opening/closing member 4 may be restricted by the engagement of the liquid injection openings 7a, 8a and the sealing members 18, 19, or by the upper end surface of the base portion 17 and by the lower end wall surface of the liquid chambers 7 and 8.
A slit 26 is formed between the right and left wing portions 22, 22. The slit 26 has a width equal to the thickness of the wing portion 14. A positional relationship between the wing portion 14 and the wing portions 22 is such that the wing portion 14 and the wing portions 22 are arranged in the same direction, i.e., arranged on the same plane in a state where the liquid injection openings 7a and 8a are closed by the sealing members 18 and 19.

The two-liquid mixing container 1 is such that the container body 2, at first, has not been combined with the liquid chamber opening/closing member 4 but the lid member 3 is coupled to the container body 2 integrally together. To introduce the adhesives into the container body 2, the container body 2 is turned upside down as shown in Fig. 4. By using an injection jig 28a, an adhesive A is introduced into the first liquid chamber 7 through the liquid injection opening 7a of the first liquid chamber 7. Next, by using an injection jig 28b, an adhesive B is introduced into the second liquid chamber 8 through the liquid injection opening 8a of the second liquid chamber 8 so will not to be mixed into the first liquid chamber 7. Here, it will be effective if the adhesives A and B that are used have such properties as to commence the chemical reaction right after they are mixed together to undergo solidification.
After the adhesives A and B are injected by predetermined amounts, the mixing chamber 20 of the container body 2 is combined with the liquid chamber opening/closing member 4. At this moment, the annular protuberance 12 of the container body 2 interferes with the pawls 24a. However, the pawls 24a are forming inclined surfaces 24b at their upper portions and do not become an obstacle. To place the liquid injection openings 7a, 8a and the sealing members 18, 19 in position, the wing portion 14 of the lid member 3 and the wing portions 22 of the liquid chamber opening/closing member 4 are set to be in the same direction (rotational angle); i.e., the sealing members 18, 19 are inserted in the liquid injection openings 7a, 8a, and the liquid chambers 7 and 8 are closed as shown in Fig. 2. Thus, the adhesives A and B are separately injected into the liquid chambers 7 and 8, and are not solidified.

A dentist who is going to treat teeth by using the adhesive contained in the container may now grip the container body 2 by his one hand and may pull the liquid chamber opening/closing member 4 downward of the container body 2 by his other hand. Therefore, the state shown in Fig. 2 is shifted to the state shown in Fig. 3. The pawls 24a of the engaging portions 24 hook to the annular protuberance 12, and the liquid chamber opening/closing member 4 does not escape from the container body 2. This liberates the sealing state of the sealing members 18, 19 and the liquid injection openings 7a, 8a and, besides, an open space is formed in the mixing chamber 20 on the upper surface of the liquid chamber opening/closing member 4 permitting the first liquid chamber 7 and the second liquid chamber 8 to be communicated with each other.
Here, the liquid chambers 7 and 8 are communicated with the mixing chamber 20 not by pushing the liquid chamber opening/closing member 4 but by pulling it. Therefore, the liquids are prevented from being mixed together by erroneous operation that could be caused by shocks given to the two-liquid mixing container 1 or by strongly gripping it in the course of handing the two-liquid mixing container 1 up to mixing the adhesives together.
Because of its structure, further, the liquid chambers 7 and 8 are communicated through without piercing a thin sheet, and no fragment of sheet contaminates into the container.
Thus, the adhesive A in the first liquid chamber 7 and the adhesive B in the second liquid chamber 8 are mixed together. Since the sealing members 18 and 19 have now been disengaged from the liquid injection openings 7a and 8a, it is allowed to turn the liquid chamber opening/closing member 4 relative to the container body 2 in the circumferential direction (around the axis thereof). The sealing members 18 and 19 provided on the upper surface of the liquid chamber opening/closing member 4 serve as stirrer members for favorably mixing the two kinds of adhesives together.

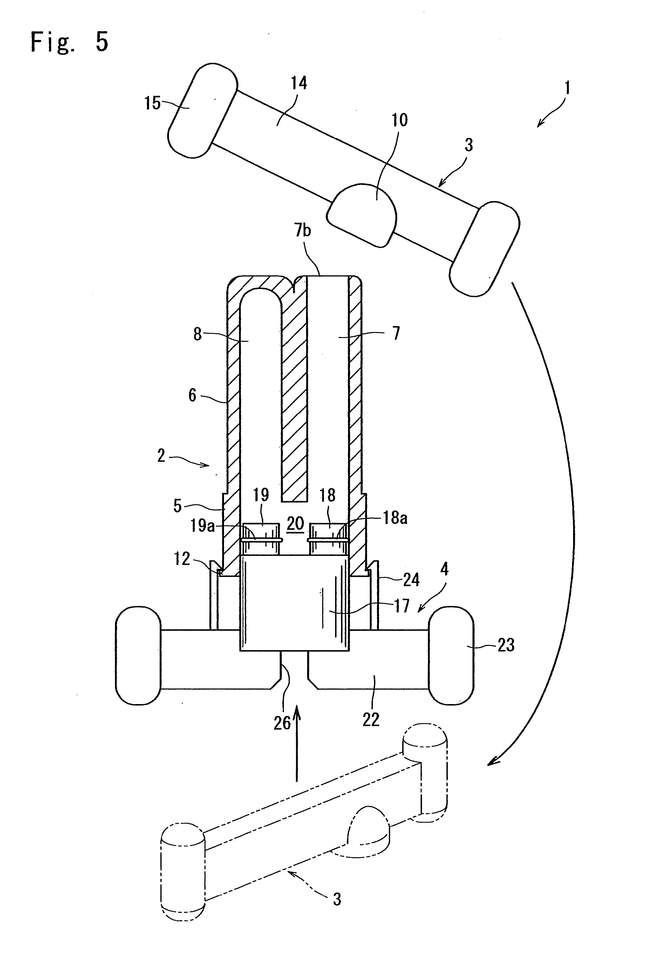

Referring to Fig. 5, to unseal the liquid chambers of the two-liquid mixing container 1, the lid member 3 is faced upward. By gripping the container body 2 or the wing portions 22 by one hand and gripping the wing portion 14 of the lid member 3 by the other hand, the container body 2 and the wing portion 14 are turned in the directions opposite to each other to cut the brittle portion 13. Upon cutting the brittle portion 13, an adhesive take-out opening 7b is formed in the container body 2. Here, the wing portion 14 has a long distance L between the support legs 15 and 15 at both ends thereof to produce a large moment of force and, therefore, the brittle portion 13 can be cut with a small force.
After the lid member 3 is separated away from the container body 2, the wing portion 14 is so turned that its direction is shifted in the circumferential direction by 90 degrees relative to the wing portions 22 of the container body 2. Thereafter, the lid member 3 is brought to just under the liquid chamber opening/closing member 4 and is inserted in the slit 26 formed in the lower portion of the liquid chamber opening/closing member 4. Namely, the two-liquid mixing container 1 is coupled in the shape of a rocket, and the lower portion of the two-liquid mixing container 1 is formed in a cross shape by the wing portions 22 and the wing portion 14 (Fig. 7).

The two-liquid mixing container 1 will be placed at a suitable position in a state where the liquid take-out opening 7b of the container body 2 is facing upward; i.e. , the container 1 maintains a stably erected attitude. In combining the container body 2 with the lid member 3, the slit 26 serves as a target position enabling the wing portions 14 and 22 to be easily put together in a cross shape.
The dentist takes out the adhesive by inserting an end of a rod 30 in the take-out opening 7b of the container body that is placed maintaining stability. The container is prevented from inclining or falling over while the adhesive is being taken out.

Thus, the dentist lets the container body 2 erected on a suitable place, and is allowed to apply the adhesive onto the patient's teeth using both hands. After the treatment, the two-liquid mixing container 1 is discarded. Here, since the container body 2 and the lid member 3 have been coupled integrally together, they do not separate away after discarded. Usually, the lid member 3 becomes rubbish (unnecessary article) at a moment when the lid member 3 is separated away from the container body 2. According to the invention, however, the lid member 3 can be effectively utilized before it turns into rubbish.
When the wing portions 22 and the wing portion 14 are assembled together in the cross shape, the two-liquid mixing container 1 becomes bulky in both the longitudinal and transverse directions. In a state where the two-liquid mixing container 1 has not been used (Fig. 2), however, the wing portion 14 and the wing portions 22 are nearly in a planar positional relationship. In the state where the wing portions 14 and 22 are laid down, the cylindrical portion 5 of the liquid chamber opening/closing member 4 assumes the greatest thickness as compared to the thicknesses of the wing portions 14 and 22. When some of many two-liquid mixing containers 1 that are not in use are to be packaged in a box, the thickness of the whole package of the containers 1 can be decreased. By overlapping the two-liquid mixing containers 1 in, for example, a laid-down attitude, an increased number of two-liquid mixing containers 1 can be contained in a decreased packaging volume.

Though an embodiment of the present invention was described above, it should be noted that the invention can be, further, modified or varied in a variety of ways without departing from the technical spirit and scope of the invention, as a matter of course.
For example, though the above embodiment has dealt with a dental container for containing dental adhesives, the container is not limited to the dental use only but can be applied to any other containers that require stably erected attitude.
In the above embodiment, further, the container body 2 and the lid member 3 are coupled together through the brittle portion 13 that is so formed as can be broken down. The lid member 3, however, may be of the threaded type or the insertion (fit) type.
The engaging portions 24 formed in a pair on the upper surfaces of the wing portions 22 at intermediate portions thereof in a direction in which they extend, may, further, be formed in a number of three or more in the circumferential direction of the cylindrical portion 5 of the container body 2 maintaining a predetermined distance to more firmly restrict the reversed position of the liquid chamber opening/closing member 4, or may, further, be formed in a manner of surrounding the cylindrical portion 5.

Though the liquid chambers 7 and 8 in this embodiment were provided in a number of two, they may be provided in a number of three or more to realize a container for using the adhesive by mixing three of more liquids together.
In the above embodiment, further, the brittle portion 13 was formed on the first liquid chamber 7 and was broken to form the liquid take-out opening 7b. Instead of forming the liquid take-out opening 7b, however, the liquid chamber opening/closing member 4 may be removed from the container body 2, and the mixed liquid may be taken out from the side of the mixing chamber 20 (liquid injection openings 7a, 8a). In this case, in the invention, the liquid take-out opening becomes the same as the liquid injection openings. In this case, further, the engaging portions 24 may be omitted.

### Description of Reference Numerals:

- 1: two-liquid mixing container
- 2: container body
- 3: lid member
- 4: liquid chamber opening/closing member
- 5: cylindrical portion
- 6: liquid chamber-forming portion
- 7: first liquid chamber
- 7a, 8a: liquid injection openings
- 7b: liquid take-out opening
- 8: second liquid chamber
- 10: lid body
- 12: annular protuberance
- 13: brittle portion
- 14, 22: wing portions
- 15: support legs (second support portions)
- 17: base portion
- 18, 19: sealing members
- 20: mixing chamber
- 23: support legs (second support portions)
- 24: engaging portions (hooking members)
- 24a: pawls
- 24b: inclined surfaces

## Claims

1. A liquid mixing container comprising:
a container body having a plurality of liquid chambers provided with liquid injection openings at the ends on one side, and a mixing chamber for communicating the liquid chambers with each other through said liquid injection openings; and
a liquid chamber opening/closing member fitted in the mixing chamber of said container body is capable of switching the liquid chambers and the mixing chamber into a closed state or a communicated state;
wherein said liquid chamber opening/closing member is provided with sealing members which, at an advanced position of having entered into said liquid injection openings, work to close said injection openings to separately close said liquid chambers and, at a backward position, work to open said injection openings permitting said liquid chambers to be communicated with the mixing chamber.

2. The liquid mixing container according to claim 1, wherein the sealing members of said liquid chamber opening/closing member are convex portions capable of being inserted in said liquid injection openings.

3. The liquid mixing container according to claim 2, wherein said liquid chamber opening/closing member at the reversed position can be turned in the circumferential direction with respect to said container body.

4. The liquid mixing container according to any one of claims 1 to 3, wherein said container body has a liquid take-out opening formed in the liquid chamber on the side opposite to the position where said liquid injection opening is provided, and is provided with a lid member for closing said liquid take-out opening.

5. The liquid mixing container according to claim 4, wherein said liquid chamber opening/closing member is provided with shaft-like first support portions for supporting said container body, said lid member is provided with shaft-like second support portions for supporting said container body and, after the lid member is detached from said container body, said first support portions and said second support portions are assembled together in a cross shape to support said container body in an erected attitude with said liquid take-out opening of said container body facing upward.
